# EUROPÄISCHE PATENTANMELDUNG

(11) **EP 1 800 993 A1**
(43) Veröffentlichungstag der Anmeldung: **27.06.2007**
(21) Anmeldenummer: 06021517.5
(22) Anmeldetag: 13.10.2006
(51) Int. Cl.: B62D 5/083, F16K 3/04

(54) **Drehschieberventil mit Steuerlängsnuten, die konisch zueinander angeordnete Steuerkanten aufweisen sowie Verfahren zur Herstellung der Steuerlängsnuten**

(30) Priorität: 22.12.2005 DE 102005062039
(71) Anmelder: ThyssenKrupp Presta SteerTec GmbH, 40476 Düsseldorf (DE)
(72) Erfinder: Cioppi, Carmine, 71384 Weinstadt (DE)
(74) Vertreter: Gerber, Wolfram

(57) **Zusammenfassung**

Die Erfindung betrifft ein Drehschieberventil, insbesondere für Hilfskraftlenkungen von Kraftfahrzeugen
- mit einem gegenüber einer Steuerbuchse (1) verdrehbaren Drehschieber (2), deren beide miteinander zusammenwirkende Flächen zylindrisch ausgebildet sind,
- wobei die Steuerbuchse (1) und der Drehschieber (2) für die Steuerung eines Druckmittels von einer Druckmittelquelle zu einem Servomotor miteinander zusammenwirkende Steuerlängsnuten (4, 5) aufweisen,
- wobei die Steuerlängsnuten (4) des Drehschiebers (2) jeweils einen Nutengrund (4a) mit angrenzenden Nutenflanken (4b) aufweisen, und die Nutenflanken (4b) zueinander parallel angeordnet sind und die dem Nutengrund (4a) abweisende Seitenkante jeweils eine Steuerkante (3) bildet,

wobei sich der Abstand der Steuerkanten (3) wenigstens der mit der Druckmittelquelle in Verbindung stehenden Steuerlängsnuten (4) des Drehschiebers (2) in bezug auf die Längsachse (A) des Drehschieberventils insbesondere stetig ändert.

## Beschreibung

Die vorliegende Erfindung betrifft ein Drehschieberventil für hydraulische Fahrzeuglenkungen sowie ein Verfahren zur Herstellung zur Herstellung zu dessen Herstellung.

### Stand der Technik

Aus der EP 0 440 665 ist ein Drehschieberventil sowie ein Verfahren zum Montieren des Drehschieberventils für hydraulische Hilfskraftlenkungen bekannt. Das Drehschieberventil enthält ein erstes Ventilelement in der Form eines Drehschiebers und ein zweites Ventilelement in der form einer Steuerbuchse, die relativ zueinander verdrehbar sind. Die Steuerbuchse und der Drehschieber weisen für die Steuerung eines Druckmittels von einer Druckmittelquelle zu einem Servomotor miteinander zusammenwirkende Steuer-Längsnuten auf. Dabei sind miteinander zusammenwirkende Steuer-Längsnuten parallel zueinander ausgebildet. Die Steuerkanten wenigstens der mit der Druckmittelquelle in Verbindung stehenden Steuer-Längsnuten des Drehwinkelschiebers sowie die mit diesen zusammenwirkenden Steuerkanten der Steuerbuchse sind in bezug auf die Längsachse des Drehschieberventils im gleichen Winkel schräg aufeinander zulaufend ausgebildet.

Zur Montage des Drehschieberventils beschreibt die EP 0 440 665 die folgenden Schritte:
1. In die mit einem Ventil-Ausgangsglied verdrehfest verbundene Steuerbuchse wird der Drehschieber eingefügt und bis unmittelbar vor einen Anschlag im Bereich des Ventil-Ausgangsgliedes nach innen verschoben;
2. anschließend werden beide Ventilelemente des Drehschieberventils mit Hilfe eines Druckmittels auf ihre Mittenposition ausgerichtet und in dieser Position gegenüber einer Drehstabfeder verdrehsicher verklemmt;
3. um den Verlauf einer Kennlinie zu ermitteln wird das Drehschieberventil nach beiden Seiten voll ausgelenkt und dabei die Druck/Winkel- oder die Druck/Momenten-Beziehung festgehalten.

Mit dem vorbeschriebenen Ventil kann die Toleranzfeldbreite der Ventilkennlinien auf ein Minimum reduziert werden.

Aus der EP 1131239 ist eine Weiterentwicklung des vorbeschriebenen Montageverfahrens gem. der EP 0 440 665 bekannt, welches die nachfolgenden Montageschritte umfaßt:
1. in die mit einem Ventil-Ausgangsglied verdrehfest verbundene Steuerbuchse wird der Drehschieber eingefügt und bis unmittelbar vor einen Anschlag im Bereich des Ventil-Ausgangsgliedes nach innen verschoben;
2. anschließend werden die beiden Ventilelemente des Drehschieberventils mit Hilfe eines Druckmittels auf ihre hydraulische Mittenposition ausgerichtet und in dieser Position gegenüber einer Drehstabfeder verdrehsicher verklemmt;
3. um den Verlauf einer Grundkennlinie zu ermitteln wird anschließend das Drehschieberventil nach beiden Seiten voll ausgelenkt und dabei die Druck/Winkel- oder die Druck/Momenten-Beziehung festgehalten;
4. die Grundkennlinie wird danach mit einer gewünschten Nominalkennlinie aus einer vorgegebenen Schar von in Software abgelegten Nominalkennlinien verglichen;
5. anschließend wird der Drehschieber in seiner Axialposition so weit verstellt, bis die gewünschte Nominalkennlinie des Drehschieberventils wenigstens in einem vorgegebenen Punkt erreicht ist;
6. letztendlich wird der Drehschieber endgültig mit der Drehstabfeder verdrehsicher verbunden.

Nachteilig bei den vorbeschriebenem Drehschieberventil ist es, dass die Herstellung der konisch aufeinander zulaufenden Steuerkanten der Steuer-Längsnuten nur mit großem Aufwand und hohen Kosten herstellbar sind.

### Aufgabe

Der vorliegenden Erfindung liegt daher die Aufgabe zugrunde, ein Drehschieberventil bereitzustellen, welches konische aufeinander zulaufende Steuerkanten aufweist, und das einfach in seiner Herstellung und kostengünstig mit der geforderten Toleranz herstellbar ist.

### Lösung der gestellten Aufgabe

Diese Aufgabe wird erfindungsgemäß mit einem Drehschieberventil mit den Merkmalen des Hauptanspruchs gelöst. Weitere vorteilhafte Ausgestaltungen des Drehschieberventils nach dem Hauptanspruch ergeben sich durch die Merkmale der Unteransprüche. Ebenfalls wird ein Verfahren zur Herstellung der Steuer-Längsnuten mit ihren konisch ausgestalteten Steuerkanten bzw. -fasen bereitgestellt.

Das erfindungsgemäße Drehschieberventil hat vorteilhaft Steuer-Längsnuten, deren Nutengrund und die an den Nutengrund angrenzenden Nutenflanken bzw. Nutenbegrenzungswände mittels eines Arbeitsganges mit einer zylindrischen Schleifscheibe oder einem Fräser herstellbar ist. Lediglich die Steuerkanten sind konisch zueinander ausgebildet, wobei die Steuerkanten relativ einfach mittels insbesondere einer zylindrischen Schleifscheibe herstellbar sind, deren Rotationsachse schräg zu der Drehschieberachse gestellt ist. Der Verlauf der Steuerkante ist dabei durch die Steuerkantenfase bestimmt. Durch die konisch aufeinander zulaufenden Steuerkanten der Steuer-Längsnuten kann vorteilhaft das Montageverfahren gem. der EP 1 131 239 B1 angewandt werden, bei dem der Drehschieber relativ zur Steuerbuchse zur Einstellung einer Momenten-Kennlinie axial verschoben wird.

In einer einfachen Ausgestaltung der Erfindung sind lediglich die Steuerkanten des Drehschiebers konisch zueinander ausgebildet. Die Steuerkanten der Steuerbuchse sind parallel zueinander ausgerichtet und mittels der bekannten Herstellungsverfahren herstellbar. Sie können jedoch ebenfalls konisch zueinander ausgerichtet sein, wobei sie analog zu den Steuer-Längsnuten des Drehschiebers mit parallelen Nutenflanken und konischen Steuerkanten ausgebildet sind.

Die konisch zueinander angeordneten Steuerkanten einer Steuer-Längsnut sind dabei mittels Fasen realisiert, deren Breite sich in axialer Längserstreckung des Drehschieberventils ändert. Die Änderung ist im einfachsten Fall linear ausgebildet. Dabei ist es möglich, dass sich die Steuerkantenfase nicht über die gesamte Länge der Steuer-Längsnut erstreckt.

Durch die erfindungsgemäße Ausgestaltung der Fasen der Steuer-Längsnuten des Drehschiebers kann durch die bei der Fertigung erfolgende Justierung in axialer Richtung die geforderte LC-Nominal-Kennlinie mit geringem Ausschuss erreicht werden. Auch können verschiedene Kennlinien innerhalb eines Toleranzfeldes eingestellt werden. Hierdurch ergibt sich zudem ein konstanteres Lenkverhalten bei der das Fahrzeug lenkenden Person. Das konische Schleifen ist vorteilhaft weniger aufwendig als insgesamt konisch gestaltete Nuten, wie sie aus dem Stand der Technik bekannt sind. Zudem sind vorteilhaft keine Veränderungen der Haupt- und Anschlussmaße des Drehschieberventils vorzunehmen.

Nachfolgend wird das erfindungsgemäße Drehschieberventil anhand von zeichnungen näher erläutert:

Es zeigen:
- Fig.-1:: Eine teilweise geschnittene Darstellung des erfindungsgemäßen Drehschieberventils in der Grundstellung;
- Fig. 1a:: Teilausschnitt des Schnittes A1-A1;
- Fig. 1b:: Teilausschnitt des Schnittes B1-B1;
- Fig. 2:: Eine teilweise geschnittene Darstellung des erfindungsgemäßen Drehschieberventils mit axial aus der Grundstellung heraus verschobenem Drehschieber;
- Fig. 2a:: Teilausschnitt des Schnittes A2-A2;
- Fig. 2b:: Teilausschnitt des Schnittes B2-B2;
- Fig. 3:: schematische Darstellung der gekippten Schleifscheibe zur Herstellung der konischen Steuerkantenfasen.

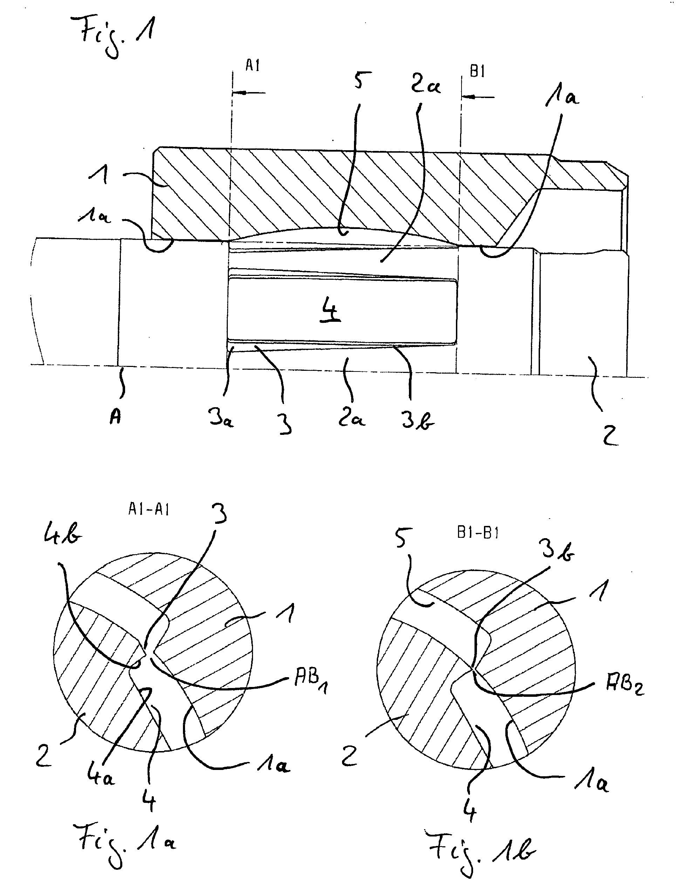

In Figur 1 ist das erfindungsgemäße Drehschieberventil dargestellt, wobei die Steuerbuchse 1 geschnitten ist. Der Drehschieber 2 ist innerhalb der Steuerbuchse 1 angeordnet und liegt mit seiner zylindrischen Außenwandung 2a gleitend und abdichtend an der zylindrischen Innenwandlung 1a der Steuerbuchse 1 an. Die Steuerbuchse 1 weist parallel zur Lenksachse A des Drehschieberventils ausgerichtete und um den Umfang der Innenwandung 1a zueinander beabstandete Steuerlängsnuten 5 auf, die mit den Steuerlängsnuten 4 des Drehschiebers 2 zusammenwirken. Die Steuerlängsnuten 4 des Drehschiebers 2 weisen einen Nutengrund 4a (Figur 1a) auf, welcher seitlich durch die Nutenwände 4b begrenzt ist. Die Steuerkante jeder Steuerlängsnute 4 ist durch den Übergang zwischen der Nutenwand 4b und der zylindrischen Außenwandung 2a des Drehschiebers gebildet. Erfindungsgemäß ist der Übergang durch eine Steuerkantenfase 3 gebildet, die durch einen Abschleifprozess erzeugbar ist. Wie aus der Figur 1 ersichtlich, ist die Steuerkantenfase 3 konisch ausgebildet, d.h. ihre Breite ändert sich entlang der Steuerlängsnut 4. Auf der linken Seite gemäß Figur 1 ist die Breite der Steuerkantenfase maximal und ändert sich linear abnehmend zur rechten Seite 3b der Steuerlängsnut 4.

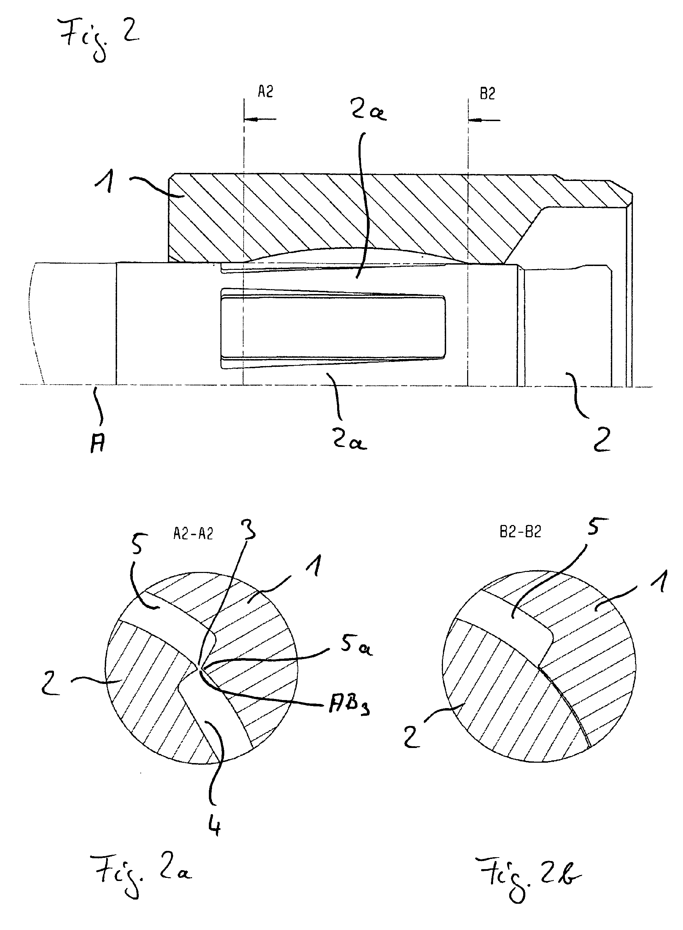

Die Figuren 1a und 1b zeigen die Schnitte A1-A1 und B1-B1 durch das Drehschieberventil der Figur 1. Im Schnitt A1-A1 ist der Abstand AB₁ zwischen der Steuerkante und der zylindrischen Innenwandung 1a der Steuerbuchse 1 maximal und nimmt kontinuierlich durch die konisch ausgebildete Steuerkantenfase 3 hin zum Schnitt B1-B1 ab, wie er in der Figur 1b dargestellt ist. Durch axiale Verschiebung des Drehschiebers innerhalb der Steuerbuchse 2 lässt sich, wie in den Figuren 2, 2a und 2b dargestellt ist, die Größe des Öffnungsquerschnitts AB₃ bei zueinander verdrehfest angeordneter Steuerbuchse und Drehschieber variieren, wodurch die Druck-Momenten-Kennlinie des Drehschieberventils veränderbar und vorgebbar ist.

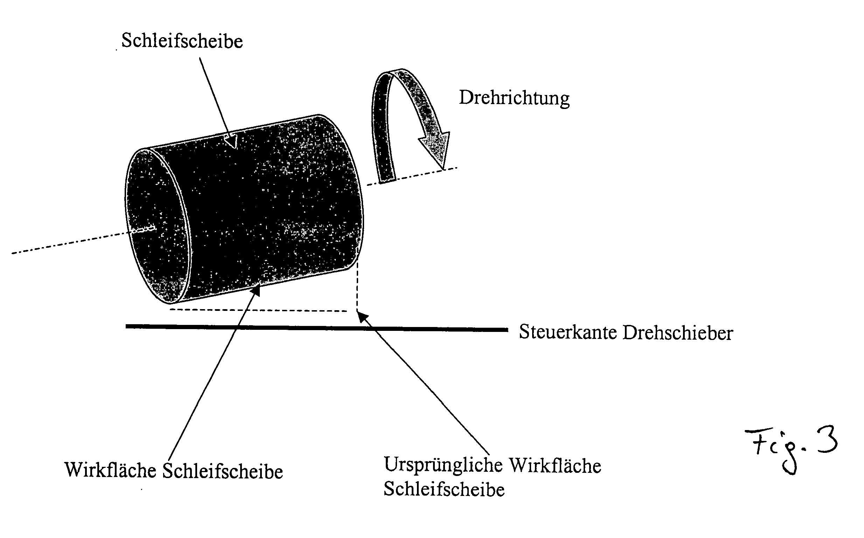

Die Figur 3 zeigt ein mögliches Herstellungsverfahren einer konischen Steuerkantenfase mittels einer zylindrischen Schleifscheibe. In einem ersten Arbeitsschritt wird eine Steuerlängsnut mittels einer zylindrischen Schleifscheibe hergestellt, wobei die Seitenwandungen 4b der Steuerlängsnut 4 parallel zueinander ausgerichtet sind. Die Steuerkante dieser in einem ersten Arbeitsschritt erzeugten Steuerlängsnut wird durch einen rechten Winkel zwischen der Nutenwand 4b und der zylindrischen Außenfläche 2a des Drehschiebers gebildet. Die Steuerkantenfase wird anschließend mit einer zylindrischen Schleifscheibe, wie sie in der Figur 3 dargestellt ist, erzeugt, in dem die Achse der zylindrische Schleifscheibe schräg zur im ersten Arbeitsschritt erzeugten Steuerkante ausgerichtet wird, wodurch die konische Fase Verfahren der Schleifscheibe erzeugbar ist. Es ist jedoch auch denkbar, dass die konische Fase mittels einer zylindrischen oder konischen Schleifscheibe hergestellt wird, deren Breite der Länge der zu erzeugenden Steuerkante entspricht. In diesem Falle ist die Fase leicht konkav ausgebildet.

Es ist selbstverständlich möglich andere Schleif- oder Herstellungsverfahren zur Herstellung der sich über die Länge der Steuerlängsnut in ihrer Breite verändernden Steuerkantenfase zu verwenden.

## Patentansprüche

1. Drehschieberventil, insbesondere für Hilfskraftlenkungen von Kraftfahrzeugen
- mit einem gegenüber einer Steuerbuchse (1) verdrehbaren Drehschieber (2), deren beide miteinander zusammenwirkende Flächen zylindrisch ausgebildet sind,
- wobei die Steuerbuchse (1) und der Drehschieber (2) für die Steuerung eines Druckmittels von einer Druckmittelquelle zu einem Servomotor miteinander zusammenwirkende Steuerlängsnuten (4, 5) aufweisen,
- wobei die Steuerlängsnuten (4) des Drehschiebers (2) jeweils einen Nutengrund (4a) mit angrenzenden Nutenflanken (4b) aufweisen, und die Nutenflanken (4b) zueinander parallel angeordnet sind und die dem Nutengrund (4a) abweisende Seitenkante jeweils eine Steuerkante (3) bildet,
**dadurch gekennzeichnet, dass** sich der Abstand der Steuerkanten (3) wenigstens der mit der Druckmittelquelle in Verbindung stehenden Steuerlängsnuten (4) des Drehschiebers (2) in bezug auf die Längsachse (A) des Drehschieberventils insbesondere stetig ändert.

2. Drehschieberventil nach Anspruch 1, **dadurch gekennzeichnet, dass** die Steuerkanten (3) durch Steuerkantenfasen gebildet sind, die in bezug auf die Längsachse (A) des Drehschieberventils konisch zueinander verlaufen.

3. Drehschieberventil nach Anspruch 1 oder 2, **dadurch gekennzeichnet, dass** sich die Breite der Steuerkantenfasen (3) stetig von einer minimalen Breite (3b) hin zu einer maximalen Breite (3a) hin ändert.

4. Drehschieberventil nach Anspruch 3, **dadurch gekennzeichnet, dass** die Breite der Steuerkantenfase (3) an einem Ende der Steuerlängsnut minimal und an dem anderen Ende der Steuerlängsnut maximal ist.

5. Drehschieberventil nach einem der vorhergehenden Ansprüche, **dadurch gekennzeichnet, dass** sich die Steuerkantenfasen (3) über die Länge der Steuerlängsnut (4) erstrecken.

6. Drehschieberventil nach einem der vorhergehenden Ansprüche, **dadurch gekennzeichnet, dass** sich der Abstand der durch die Nutenflanke (4b) und der Steuerkantenfase (3) gebildeten Kante und der zylindrischen Mantelfläche der Steuerbuchse entlang der Steuerlängsnut verändert.

7. Drehschieberventil nach einem der vorhergehenden Ansprüche, **dadurch gekennzeichnet, dass** die Steuerkantenfase entlang einer geraden Linie verläuft.

8. Drehschieberventil nach einem der vorhergehenden Ansprüche, **dadurch gekennzeichnet, dass** die Steuerkanten der Steuerbuchse parallel zueinander angeordnet sind.

9. Drehschieberventil nach einem der Ansprüche 1 bis 7, **dadurch gekennzeichnet, dass** die Steuerlängsnuten (5) der Steuerbuchse (1) einen Nutengrund aufweisen, an den sich zueinander parallel angeordnete Nutenflanken angrenzen, die an ihrer vom Nutengrund abweisenden Seitenkante jeweils eine Steuerkantenfase aufweisen.

10. Drehschieberventil nach Anspruch 9, **dadurch gekennzeichnet, dass** die Steuerkanten der Steuerkantenfasen der Steuerbuchse (1) in bezug auf die Längsachse des Drehschieberventils konisch zueinander verlaufen.

11. Drehschieberventil nach Anspruch 9, **dadurch gekennzeichnet, dass** die Steuerkanten der Steuerkantenfasen des Drehschiebers sowie der Steuerbuchse parallel zueinander angeordnet sind.

12. Verfahren zur Herstellung einer Steuerlängsnut eines Drehschieberventils nach einem der vorhergehenden Ansprüche, **dadurch gekennzeichnet, dass** in einem ersten Arbeitsgang die Steuerlängsnut mit ihrem Nutengrund und den parallelen Nutenflanken hergestellt wird, und dass in einem weiteren Arbeitsgang durch Formschleifen mittels einer zylindrischen oder konischen Schleifscheibe die Steuerkantenfasen hergestellt werden.

13. Verfahren nach Anspruch 12, **dadurch gekennzeichnet, dass** die Achse der zylindrischen Schleifscheibe zur Herstellung einer Steuerkantenfase windschief zur Längsachse des Drehschiebers bzw. der Steuerbuchse ist.

14. Verfahren nach Anspruch 12, **dadurch gekennzeichnet, dass** die Achse der konischen Schleifscheibe zur Herstellung einer Steuerkantenfase parallel zur Längsachse der zuvor hergestellten Steuerlängsnut bzw. deren Nutenflanke ist.

15. Verfahren nach einem der Ansprüche 12 bis 14, **dadurch gekennzeichnet, dass** im ersten Arbeitsgang der Nutengrund sowie die Nutenflanken mit einer zylindrischen Schleifscheibe hergestellt werden, wobei die Schleifscheibe in Längsrichtung der herzustellenden Steuerlängsnut relativ zu dieser bewegt wird.

16. Verfahren nach einem der Ansprüche 12 bis 14, **dadurch gekennzeichnet, dass** im ersten Arbeitsgang der Nutengrund sowie die Nutenflanken mit einer Profilschleifscheibe hergestellt werden, wobei die Schleifscheibe einen Schleifbelag an ihrer zylindrischen Umfangsfläche zum Schleifen des Nutengrundes sowie an den beiden Schleifscheibenseiten hat, wobei sich die Breite der Schleifscheibe radial nach außen hin verkleinert, derart, dass beim Verfahren der Schleifscheibe in Längsrichtung eine im wesentlichen u-förmige oder v-förmige Steuerlängsnut entsteht.

17. Verfahren nach einem der Ansprüche 12 bis 16, **dadurch gekennzeichnet, dass** die Breite der zylindrischen Schleifscheibe zur Herstellung der Nutenfasen der Länge der zu erzeugenden Nutenfase entspricht.

18. Verfahren nach einem der Ansprüche 12 bis 16, **dadurch gekennzeichnet, dass** das die Schleifscheibe zur Herstellung der Nutenkantenfase während des Schleifarbeitsganges parallel zu ihrer Achse verstellt wird.
